# EUROPEAN PATENT APPLICATION

(11) **EP 4 513 723 A1**
(43) Date of publication of application: **26.02.2025**
(21) Application number: 24186341.4
(22) Date of filing: 03.07.2024
(51) Int. Cl.: H02K 5/24, A61C 17/34, F16F 15/08

(54) **MOTOR HOLDER, MOTOR ASSEMBLY, AND ELECTRIC TOOTHBRUSH**

(30) Priority: 25.08.2023 CN 202311085598
(71) Applicant: Shenzhen Shuye Technology Co., Ltd., Shenzhen, Guangdong 518000 (CN)
(72) Inventor: YE, Hongxin, Xinxing Town, Songyang County 323400 (CN); WANG, Zisheng, Shenzhen 518000 (CN); XIAO, Meiliang, Shenzhen 518000 (CN)
(74) Representative: Ipey

(57) **Abstract**

A motor holder, a motor assembly, and an electric toothbrush. The motor holder is configured to be arranged on a motor module, and the motor holder includes a first surface facing the motor module; a rigid body, being a hard rubber part; and a vibration damping structure, being a soft rubber part. The vibration damping structure is integrally injection molded with the rigid body; the vibration damping structure includes a bonding portion and a plurality of vibration damping protrusions arranged on the bonding portion; the bonding portion is connected to the rigid body, the plurality of vibration damping protrusions are arranged at intervals, and the plurality of vibration damping protrusions protrude from the first surface.

## Description

### TECHNICAL FIELD

The present disclosure relates to the technical field of motors, and more specifically to a motor holder, a motor assembly, and an electric toothbrush.

### BACKGROUND

In the development of related art, the motor holder is usually a one-piece structure made of a single material, which only plays the role of supporting and fixing the motor, and the vibration damping effect of the motor holder itself is poor. Therefore, the conventional motor holder is required to be used in conjunction with a vibration damping liner, which increases the process and difficulty of assembly. In addition, with the increase of the use of time and by the influence of vibration, the vibration damping liner is easy to fall off from the motor holder, which leads to the deterioration of the vibration damping effect.

### SUMMARY OF THE DISCLOSURE

The main purpose of the present disclosure is to propose a motor holder, a motor assembly, and an electric toothbrush, aiming to ensure a good vibration-damping effect while solving the technical problem that the assembly processes of the traditional motor are cumbersome and difficult to realize.

In order to realize the above purpose, the present disclosure proposes a motor bracket, configured to be arranged on a motor module; wherein the motor holder includes: a first surface facing the motor module; a rigid body, being a hard rubber part; and a vibration damping structure, being a soft rubber part; wherein the vibration damping structure is integrally injection molded with the rigid body; the vibration damping structure includes a bonding portion and a plurality of vibration damping protrusions arranged on the bonding portion; the bonding portion is connected to the rigid body, the plurality of vibration damping protrusions are arranged at intervals, and the plurality of vibration damping protrusions protrude from the first surface.

In some embodiments, the first surface is arranged with an adhesive compartment, and the bonding portion is embedded in the adhesive compartment.

In some embodiments, a side of the bonding portion back away from the adhesive compartment is flush with the first surface.

In some embodiments, the rigid body is of a cylindrical shape, and an end of the rigid body defines an adhesive injection hole; the first surface is an inner wall surface of the rigid body; the adhesive compartment includes a first groove extending along an axial direction of the rigid body, and an end of the first groove is in communication with the adhesive injection hole; a width of the first groove gradually increases in a direction away from the adhesive injection hole.

In some embodiments, a groove bottom of the adhesive compartment defines a restriction groove, and a portion of the bonding portion is embedded in the restriction groove.

In some embodiments, the rigid body includes a first end face and a second end face disposed back-to-back; the first surface connects the first end face and the second end face; the first end face defines an adhesive injection hole, and the adhesive injection hole is in communication with the adhesive compartment; the restriction groove passes through the second end face.

In some embodiments, the rigid body is of a cylindrical shape, and the first surface is an inner wall surface of the rigid body; the adhesive compartment includes a first groove and a second groove; the first groove extends along an axial direction of the rigid body, and an end of the first groove is in communication with the adhesive injection hole; the another end of the first groove is in communication with the second groove; the second groove extends along a peripheral direction of the rigid body; the restriction groove is defined on the second groove, and a length of the restriction groove along the peripheral direction of the rigid body is equal to a length of the second groove along the peripheral direction of the rigid body.

In some embodiments, the rigid body is of a cylindrical shape, and the vibration damping structure is arranged on a peripheral wall of the rigid body; the vibration damping structure includes a plurality of vibration damping sections spaced apart along a peripheral direction of the rigid body; each vibration damping section extends along an axial direction of the rigid body and is arranged with at least some of the plurality of vibration damping protrusions.

In some embodiments, the vibration damping structure further includes a connecting section extending along the peripheral direction of the rigid body and connecting the plurality of vibration damping sections.

In some embodiments, the rigid body defines a plurality of adhesive injection holes spaced apart along the peripheral direction of the rigid body; for each of the plurality of adhesive injection holes, the adhesive injection hole faces a corresponding vibration damping section; an end of the corresponding vibration damping section is disposed within the adhesive injection hole, and another end of the vibration damping section is connected to the connecting section.

In some embodiments, the connecting section includes a plurality of connecting sections spaced apart along the peripheral direction of the rigid body, each connecting section connecting at least some of the plurality of vibration damping sections.

In some embodiments, the plurality of vibration damping sections are uniformly distributed along the peripheral direction of the rigid body, each vibration damping section is arranged with at least some of the plurality of vibration damping protrusions, and the at least some of the plurality of vibration damping protrusions disposed on each vibration damping section are uniformly distributed along an axial direction of the rigid body.

The present disclosure further provides a motor assembly, including: a motor module, including a motor housing, a stator, and a rotor; wherein the motor housing defines a receiving cavity, and the stator and the rotor are disposed inside the receiving cavity; and the motor holder as above, disposed on an outer side of the motor housing; wherein the rigid body is fixed to the motor housing, and the plurality of vibration damping protrusions face an outer surface of the motor housing.

In some embodiments, the plurality of vibration damping protrusions directly abut against the outer surface of the motor housing; or the motor assembly further includes a vibration damping sleeve; the motor housing, the vibration damping sleeve, and the motor holder are disposed in a sleeving manner in sequence; the vibration damping sleeve abuts against the motor housing and the plurality of vibration damping protrusions, respectively.

The present disclosure further provides an electric toothbrush, including: a handle, including a housing; wherein the housing defines a mounting cavity; and the motor assembly as above, disposed in the mounting cavity; wherein the motor holder is fixed to the housing.

In the technical solution of the present disclosure, by combining the rigid body and the vibration damping structure in one-piece injection molding, the combination degree is high, such that a vibration damping function is realized, and the vibration damping structure will not fall off from the rigid body after a long period of use. In addition, the one-piece injection molding method is convenient for processing, eliminating the assembly process, and the direct injection molding together will lead to high precision with a simple and compact structure, which may avoid vibration caused by assembly errors and further reduce noise. Further, the assembly efficiency of the overall structure is high, which may further reduce the cost. Further, the vibration damping protrusions are provided on the vibration damping structure, where the vibration damping protrusions protrude from the surface of the rigid body, and the vibration damping protrusions pointing to a vibration source (e.g., the motor housing) can be in contact with the vibration source, thereby avoiding the vibration source from coming into direct contact with the rigid body, and thus avoiding the vibration generated by the vibration source from being directly transmitted to the rigid body and causing the rigid body to vibrate together. Further, each adjacent two vibration damping protrusions are spaced apart, and this spacing may provide space for the deformation of the vibration damping protrusions, such that when the vibration damping protrusions are subjected to vibration extrusion from the vibration source (e.g., the motor housing), the vibration damping protrusions deform toward the spacing to absorb and mitigate a large portion of the vibration. Moreover, the spacing may serve as a sound-absorbing cavity to absorb a portion of the noise. In this way, the formation of multiple vibration damping protrusions is more effective in damping vibrations relative to a vibration damping method in the form of a single integral plane.

### BRIEF DESCRIPTION OF THE DRAWINGS

To more clearly illustrate the technical solutions of the embodiments of the present disclosure, the accompanying drawings of the embodiments will be briefly described below, and it will be apparent that the accompanying drawings in the following description relate only to some embodiments of the present disclosure and other drawings may be obtained from these drawings by those skilled in the art without creative labor.
FIG. 1 is a structural schematic view of a motor holder according to some embodiments of the present disclosure.
FIG. 2 is a cross-sectional schematic view of the motor holder in FIG. 1.
FIG. 3 is an exploded schematic view of the motor holder in FIG. 1.
FIG. 4 is a structural schematic view of a rigid body in FIG. 1.
FIG. 5 is another cross-sectional schematic view of the motor holder in FIG. 1.
FIG. 6 is a partially enlarged view at area A in FIG. 5.
FIG. 7 is a cross-sectional schematic view of a rigid body in FIG. 1.
FIG. 8 is a partially enlarged view at area B in FIG. 7.
FIG. 9 is a plane schematic view of the rigid body in FIG. 4.
FIG. 10 is a structural schematic view of a motor assembly according to some embodiments of the present disclosure.
FIG. 11 is a cross-sectional schematic view of the motor assembly in FIG. 10.
FIG. 12 is a partially enlarged view at area C in FIG. 7.
FIG. 13 is a partially enlarged view of a motor assembly according to other embodiments of the present disclosure.
FIG. 14 is a structural schematic view of a motor housing in FIG. 10.
FIG. 15 is a structural schematic view of an electric toothbrush according to some embodiments of the present disclosure.
FIG. 16 is a partially cross-sectional schematic view of the electric toothbrush in FIG. 15.

**Reference numerals**

| No. | Name | No. | Name | No. | Name |
|---|---|---|---|---|---|
| 100 | Motor assembly | 117 | Anti-rotation rib | 22 | shaft hole |
| 10 | Motor holder | 118 | First large-cylinder section | 23 | Second large-cylinder section |
| 11 | Rigid body | 119 | First small-cylinder section | 24 | Second small-cylinder section |
| 111 | First surface | 12 | Vibration damping structure | 31 | Stator |
| 112 | Adhesive compartment | 121 | Bonding portion | 32 | Rotor |
| 1121 | First groove | 1221 | Vibration damping section | 40 | Vibration damping sleeve |
| 1122 | Second groove | 1222 | Connecting section | 50 | Motor shaft |
| 113 | Adhesive injection hole | 122 | Vibration dampening protrusion | 200 | Handle |
| 114 | Restriction groove | 123 | Restriction protrusion | 201 | Housing |
| 115 | First end face | 20 | Motor housing | 300 | Brush head |
| 116 | Second end face | 21 | Reception chamber | 400 | Cushioning structure |

The realization of the purpose, functional features, and advantages of the present disclosure will be further described in conjunction with the embodiments and with reference to the accompanying drawings.

### DETAILED DESCRIPTION

The technical solutions in the embodiments of the present disclosure will be described clearly and completely in the following in conjunction with the accompanying drawings in the embodiments of the present disclosure, and it is obvious that the described embodiments are only a part of the embodiments of the present disclosure and not all of the embodiments. Based on the embodiments in the present disclosure, all other embodiments obtained by those skilled in the art without making creative labor fall within the scope of the present disclosure.

It should be noted that in the description of the present disclosure, when terms of "first", "second" and the like appear, the terms of "first", "second", and the like are only intended to facilitate the description of different parts or names, and are not to be understood as indicating or implying sequential relationships, relative importance, or implicitly specifying the number of technical features indicated. As a result, a feature defined with "first" or "second" may include at least one such feature, either explicitly or implicitly. In addition, when "and/or" appears throughout the text, it is meant to include three concurrent solutions, and in the case of "A and/or B", it is meant to include an A solution, a B solution, or a solution in which both A and B are satisfied.

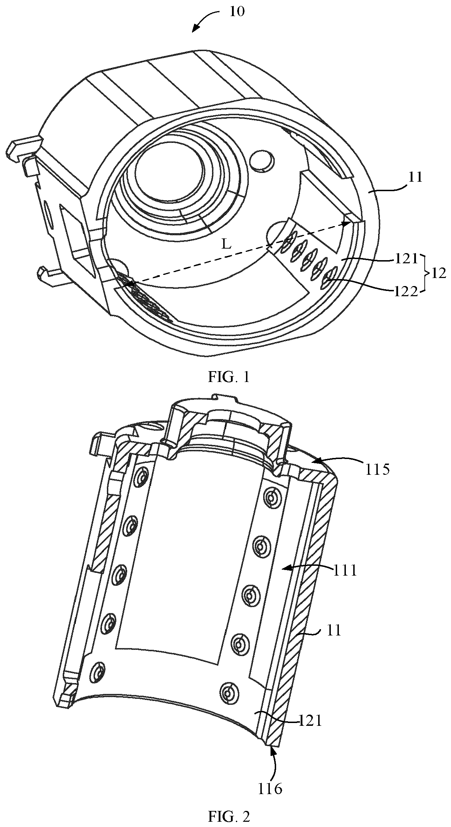

With reference to FIGS. 1 to 3 together, the present disclosure provides a motor holder 10 configured to be arranged on a motor module so as to fix the motor module to other structures, thereby preventing the motor module from randomly swaying. The motor holder 10 includes a first surface 111 facing the motor module, and the motor holder 10 includes a rigid body 11 and a vibration damping structure 12; where the rigid body 11 is a hard rubber part, and the vibration damping structure 12 is a soft rubber part; the vibration damping structure 12 is integrally injection molded with the rigid body 11, the vibration damping structure 12 includes a bonding portion 121 and multiple vibration damping protrusions 122 arranged on the bonding portion 121; the bonding portion 121 is connected to the rigid body 11, the multiple vibration damping protrusions 122 are arranged at intervals, and the multiple vibration damping protrusions 122 protrude from the bonding portion 121 and the first surface 111 of the rigid body 11.

In the embodiments of the present disclosure, by combining the rigid body 11 and the vibration damping structure 12 in one-piece injection molding, the combination degree is high, such that a vibration damping function is realized, and the vibration damping structure 12 will not fall off from the rigid body 11 after a long period of use. In addition, the one-piece injection molding method is convenient for processing, eliminating the assembly process, and the direct injection molding together will lead to high precision with a simple and compact structure, which may avoid vibration caused by assembly errors and further reduce noise. Further, the assembly efficiency of the overall structure is high, which may further reduce the cost. Further, the vibration damping protrusions 122 are provided on the vibration damping structure 12, where the vibration damping protrusions 122 protrude from the surface of the rigid body 11, and the vibration damping protrusions 122 pointing to a vibration source (e.g., a motor housing 20) can be in contact with the vibration source, thereby avoiding the vibration source from coming into direct contact with the rigid body 11, and thus avoiding the vibration generated by the vibration source from being directly transmitted to the rigid body 11 and causing the rigid body 11 to vibrate together. Further, each adjacent two vibration damping protrusions 122 are spaced apart, and this spacing may provide space for the deformation of the vibration damping protrusions 122, such that when the vibration damping protrusions 122 are subjected to vibration extrusion from the vibration source (e.g., the motor housing 20), the vibration damping protrusions 122 deform toward the spacing to absorb and mitigate a large portion of the vibration. Moreover, the spacing may serve as a sound-absorbing cavity to absorb a portion of the noise. In this way, the formation of multiple vibration damping protrusions 122 is more effective in damping vibrations relative to a vibration damping method in the form of a single integral plane.

The rigid body 11 and the vibration damping structure 12 are both made of plastic, and the rigid body 11 has greater rigidity and strength relative to the vibration damping structure 12. The rigid body 11 serves as a main member and plays the role of supporting and fixing the rigid body 11; the vibration damping structure 12 has a lower rigidity, which is softer and more flexible, and it has better elasticity to play a better function of damping the vibration.

In some embodiments, the rigid body 11 may be prepared using materials such as acrylonitrile-butadiene-styrene (ABS), polycarbonate (PC), polyamide (PA), etc. The vibration damping structure 12 may be prepared from thermoplastic polyurethane (TPU) or silicone. In some embodiments, considering the molding temperature and sequence, the rigid body 11 is injection molded first, and then the vibration damping structure 12 is integrally injection molded on the rigid body 11. Therefore, the vibration damping structure 12 may be prepared from TPU with a lower melting point, so as to avoid the rigid body 11 from melting caused by the melting temperature of the vibration damping structure 12 being too high.

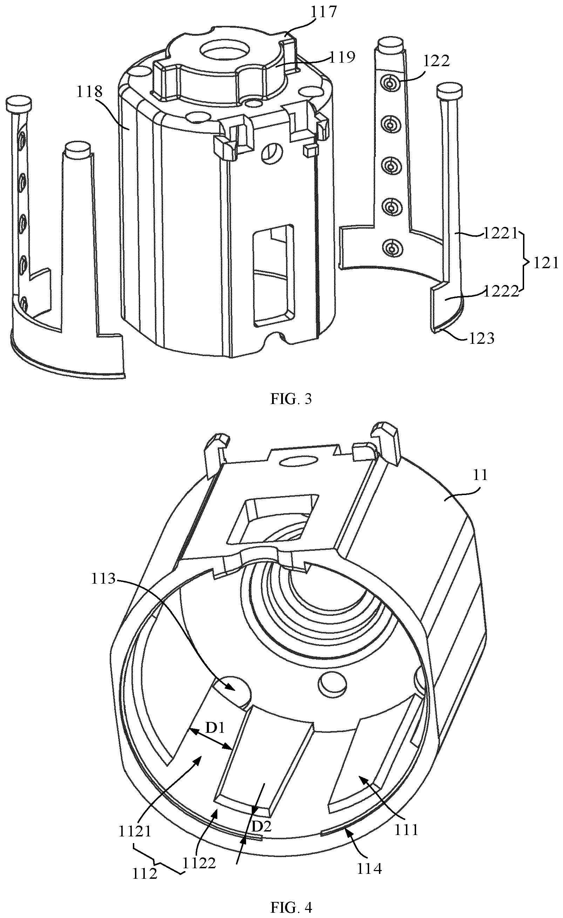

Referring to FIGS. 3 and 4 together, in order to further improve the adhesion of the vibration damping structure 12 on the rigid body 11 and reduce the risk of both falling off, in some embodiments, the rigid body 11 includes the first surface 111; where the first surface 111 is arranged with an adhesive compartment 112, the bonding portion 121 is arranged within the adhesive compartment 112, and the vibration damping protrusions 122 protrude out of the first surface 111. Therefore, the bonding portion 121 is embedded in the adhesive compartment 112, the bonding portion 121 fills the adhesive compartment 112, and the two form a mutually embedded structure, which may increase the contact area, i.e., the connection area, between the bonding portion 121 and the rigid body 11, such that the connection effect is better, and the attachment of the bonding portion 121 to the rigid body 11 is more stable.

In some embodiments, a side of the bonding portion 121 back away from the adhesive compartment 112 is flush with the first surface 111, and the bonding portion 121 is not protruding out of the first surface 111, which may reduce the risk of the bonding portion 121 being dislodged from the rigid body 11 due to the collision of the bonding portion 121 with other structures. The side of the bonding portion 121 back away from the adhesive compartment 112 refers to the side of the bonding portion 121 oriented to an opening of the adhesive compartment 112.

The shape of the adhesive compartment 112 matches the vibration damping structure 12 and is designed according to the shape of the vibration damping structure 12 to be formed. That is, when the vibration damping structure 12 is designed as an elongate shape, the adhesive compartment 112 is correspondingly designed as an elongate shape; when the vibration damping structure 12 is designed as an annulus, the adhesive compartment 112 is also designed as an annulus. A specific shape of the adhesive compartment 112 (including a first groove 1121 and a second groove 1122) will be described in detail in later embodiments.

In some embodiments, the rigid body 11 is in the shape of a cylinder and an end of the rigid body 11 defines an adhesive injection hole 113; the first surface 111 is an inner wall surface of the rigid body 11; the adhesive compartment 112 includes a first groove 1121 extending along an axial direction of the rigid body 11, and an end of the first groove 1121 is in communication with the adhesive injection hole 113. The vibration damping structure 12 filled into the first groove 1121 is thus in the shape of an elongate strip extending along the axial direction of the rigid body 11. When the adhesive is injected from the adhesive injection holes 113, the adhesive flows in the length direction of the first groove 1121 without turning and with good flow performance. In some embodiments, the width D1 of the first groove 1121 gradually increases in a direction away from the adhesive injection hole 113, such that the adhesive can be guided in the flow direction of the adhesive, which facilitates the flow of the adhesive to a distal end of the adhesive injection hole 113 and facilitates the adhesive to fill up the first groove 1121 more quickly. The width of the first groove 1121 refers to a width along a circumference direction of the rigid body 11.

In some embodiments, the adhesive compartment 112 further includes a second groove 1122, where an end of the first groove 1121 is in communication with the adhesive injection hole 113, and the other end of the first groove 1121 is in communication with the second groove 1122; the second groove 1122 extends along the peripheral direction of the rigid body 11. That is, the second groove 1122 is disposed at an end remote from the adhesive injection hole 113. Each of the second grooves 1122 is connected to multiple first grooves 1121. In the vibration damping structure 12 formed according to the first grooves 1121 and the second grooves 1122, multiple vibration damping sections 1221 are connected to a connecting section 1222 at the same time, and the connecting section 1222 realizes the connection of the multiple vibration damping sections 1221 to form an integral structure, which generates a mutually restraining limiting force between the multiple vibration damping sections 1221 and between the multiple vibration damping sections 1221 and the connecting section 1222, thereby reducing the risk of the vibration damping structure 12 falling off from the rigid body 11. Further, the adhesive flows from the multiple first grooves 1121 and then converge into the second groove 1122, such that the adhesive receives a certain amount of cushioning inside the second groove 1122 and does not pile up at the bottom of the first groove 1121, thereby preventing an excessively large wall thickness. Furthermore, the second groove 1122 serves as a converging groove for the adhesive flowing down from the multiple first grooves 1121, and the adhesive flowing down from the first grooves 1121 naturally flows into the second groove 1122 and gradually diverges to the peripheral sides, basically without excessive and rapid turning, which is also conducive to the smooth flow of the adhesive.

In some embodiments, the width D2 of the second groove 1122 is consistent at various places, and therefore the width of the connecting section 1222 formed is also consistent at various places. In the embodiments, the width of the second groove 1122 refers to a width along the axial direction of the rigid body 11.

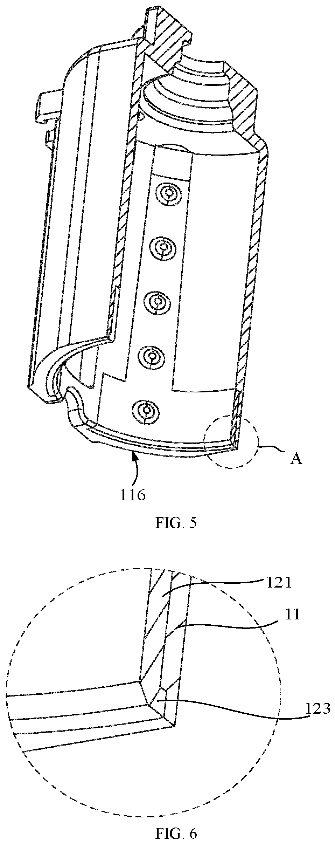

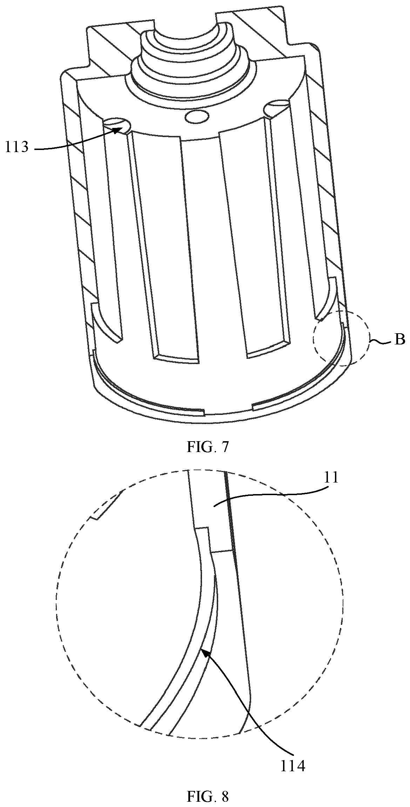

Referring to FIGS. 5 to 8 in conjunction, further, a groove bottom of the adhesive compartment 112 further defines a restriction groove 114, and a portion of the bonding portion 121 is embedded in the restriction groove 114. In the embodiments, the adhesive compartment 112 has an opening on the first surface 111, and the groove bottom of the adhesive compartment 112 refers to a side opposite to the opening. At a position where the restriction groove 114 is provided, the adhesive compartment 112 and the restriction groove 114 are superimposed toward the opening and thus have a larger depth. At a position where only the adhesive compartment 112 is provided, the adhesive compartment 112 has a smaller depth. The bonding portion 121 fills both the adhesive compartment 112 and the restriction groove 114, and the bonding portion 121 and the restriction groove 114 form a structure that occludes each other, where the portion of the bonding portion 121 within the restriction groove 114 serves as a restriction protrusion 123, and the restriction protrusion 123 is equivalent to a rivet that anchors the vibration damping structure 12 and the rigid body 11, thereby enhancing the stability of the cooperation between the two.

The number of the restriction grooves 114 may be one or more, and the shape of the restriction groove 114 may be a small round groove, a small square hole, an elongated groove, an arcuate groove, etc. The restriction grooves 114 may be distributed at various positions of the adhesive compartment 112, such as a position near the adhesive injection hole 113, a position away from the adhesive injection hole 113, etc.

In some embodiments, the rigid body 11 includes a first end face 115 and a second end face 116 disposed back-to-back, where the first surface 111 connects the first end face 115 and the second end face 116; the first end face 115 defines the adhesive injection hole 113, and the adhesive injection hole 113 is in communication with the adhesive compartment 112; the restriction groove 114 passes through the second end face 116. When the vibration damping structure 12 is integrally injection molded on the rigid body 11, the adhesive forming the vibration damping structure 12 is injected through the adhesive injection hole 113, and the adhesive flows along the first surface 111. When the adhesive compartment 112 is arranged on the first surface 111, the adhesive flows along the adhesive compartment 112 on the first surface 111, and when the adhesive material cools down, the vibration damping structure 12 is finally formed.

In the embodiments, the adhesive compartment 112 extends from the first end surface 115 to the second end surface 116, and the restriction groove 114 passes through the second end surface 116, whereby it can be seen that the restriction groove 114 is arranged far away from the adhesive injection hole 113 and the restriction groove 114 forms a notched groove. Therefore, the restriction groove 114 may further serve as a sealing groove to be a parting surface of a fixed mold and a moving mold. After the vibration damping structure 12 is embedded in the restriction groove 114, the vibration damping structure 12 forms a restriction protrusion 123, which, similar to the function of a snap hook, may hook onto a groove wall of the restriction groove 114 to limit the movement of the vibration damping structure 12 in a direction from the second end face 116 to the first end face 115.

In some embodiments, the restriction groove 114 is defined on the second groove 1122, and a length of the restriction groove 114 along the peripheral direction of the rigid body 11 is equal to a length of the second groove 1122 along the peripheral direction of the rigid body 11, and two ends of the restriction groove 114 along the peripheral direction of the rigid body 11 are one-to-one correspondingly flush with two ends of the second groove 1122 along the peripheral direction of the rigid body 11. After such a setting, the adhesive flowing from a side of the second groove 1122 away from the first groove 1121 is not required to change direction and can directly enter the sealing groove, which is conducive to the flow of the adhesive and reduces the risk of burrs, etc. The side of the connecting section 1222 away from the vibration damping section 1221 is thus used as a parting surface. Of course, the length of the restriction groove 114 may be less than the length of the second groove 1122. In other embodiments, the restriction groove 114 is defined on the first groove 1121. In the embodiments, the length of the rigid body 11 along the peripheral direction of the rigid body 11 refers to the length of the connecting section 1222 along the peripheral direction of the rigid body 11, and the length of the connecting section 1222 along the peripheral direction of the rigid body 11 is expressed by a chord length L as shown in FIG. 1.

When the rigid body 11 is in the shape of a cylinder, an annular groove may be defined on an inner peripheral wall of the rigid body 11, and a portion of the annular groove constitutes the second groove 1122, so as to facilitate processing.

In the embodiments of the present disclosure, the rigid body 11 may be in the form of a cylinder, an annulus, a disk, a sheet, or a plate, which may be designed according to the shape of the motor housing 20, according to a location where the motor holder 10 is set up on the motor housing 20, or according to parts of the motor housing 20 where vibration damping is required, etc. In some embodiments, the rigid body 11 is in the shape of a cylinder, and the vibration damping structure 12 is arranged on a peripheral wall of the rigid body 11. For example, according to a relative position of the rigid body 11 and the motor housing 20, the vibration damping structure 12 may be arranged on an inner peripheral wall or an outer peripheral wall of the rigid body 11.

Referring again to FIGS. 1 to 3 in conjunction, in some embodiments, the vibration damping structure 12 includes multiple vibration damping sections 1221 spaced apart along a peripheral direction of the rigid body 11; each vibration damping section 1221 extends along the axial direction of the rigid body 11 and is arranged with multiple vibration damping protrusions 122. If the entire inner peripheral wall of the rigid body 11 is covered by the vibration damping structure 12, the flow range of the adhesive is too large, such that the fluidity of the adhesive will be poor, and it will be difficult to form the bonding portion 121 with a uniform wall thickness, even leading to a situation in which there is uneven or no adhesive filling at a position away from the adhesive injection hole 113. In the present embodiments, the vibration damping structure 12 is divided into multiple spaced vibration damping sections 1221, such that the vibration damping structure 12 does not cover all the peripheral wall of the rigid body 11, and the flow range of the adhesive is relatively small, such that the fluidity performance is better. In addition, the multiple vibration damping sections 1221 are distributed at intervals along the peripheral direction of the rigid body 11, and thus can play a better vibration damping effect on the motor housing 20 at different positions on the peripheral direction, thereby effectively blocking the vibration of the motor housing 20 from being transmitted outward.

Further, the vibration damping structure 12 further includes the connecting section 1222 extending along the peripheral direction of the rigid body 11 and connecting the multiple vibration damping sections 1221, such that the multiple vibration damping sections 1221 can be connected to form a whole, which is conducive to fixing the vibration damping sections 1221.

In some embodiments, the vibration damping structure 12 includes multiple connecting sections 1222 spaced apart along the peripheral direction of the rigid body 11, and each connecting section 1222 connect different some of the multiple vibration damping sections 1221, such that adjacent two connecting sections 1222 are equivalent to being truncated, which may shorten the flow path of the adhesive and facilitate the formation of a shapely and regular vibration damping structure 12.

In some embodiments, the vibration damping structure 12 includes two connecting sections 1222 and four vibration damping sections 1221, where two of the vibration damping sections 1221 are connected to one connecting section 1222, and the other two of the vibration damping sections 1221 are connected to the other connecting section 1222.

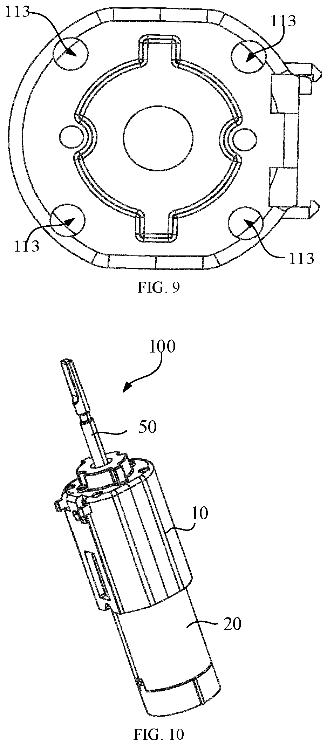

With reference to FIG. 9, in some embodiments, the rigid body 11 defines multiple adhesive injection holes 113 spaced apart along the peripheral direction of the rigid body 11, and each of the adhesive injection holes 113 faces a corresponding vibration damping section 1221; an end of the vibration damping section 1221 is disposed within the adhesive injection hole 113, and the other end of the vibration damping section 1221 is connected to the corresponding connecting section 1222. Therefore, the vibration damping sections 1221 do not share the same adhesive injection hole 113, such that the flow path of the adhesive entering from a single adhesive injection hole 113 is relatively short, and the overall molding time is short, which is conducive to maintaining a more consistent temperature of the adhesive at various places, thereby forming a shapely and regular vibration damping structure 12. In addition, since the adhesive injection holes 113 are defined on an end along the length direction of the vibration damping section 1221, the adhesive entering from the adhesive injection hole 113 directly flows along the length direction of the vibration damping section 1221 without the need to change the flow direction.

In some embodiments, the multiple vibration damping sections 1221 are uniformly distributed along the peripheral direction of the rigid body 11, each vibration damping section 1221 is arranged with multiple vibration damping protrusions 122, and the multiple vibration damping protrusions 122 disposed on the same vibration damping section 1221 are uniformly distributed along the axial direction of the rigid body 11. Therefore, in the peripheral and axial directions of the rigid body 11, the vibration damping protrusions 122 are uniformly distributed, and the vibration damping protrusions 122 can play a stable and uniform force on the motor housing 20, such that the motor housing 20 is uniformly subjected to the force, and the motor housing 20 is maintained in a predetermined position, while reducing the risk of the motor housing 20 deviating from the predetermined position.

Taking four the vibration damping sections 1221 included as an example, and the angle between any two adjacent vibration damping sections 1221 is 90°. Therefore, the four vibration damping sections 1221 are evenly distributed around the rigid body 11.

The vibration damping protrusion 122 may be hemispherical, cylindrical, conical, etc., which is not limited herein.

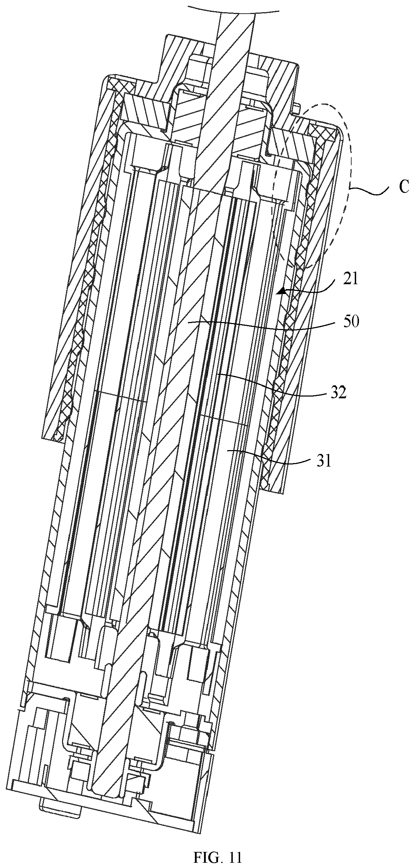

Referring to FIGS. 10 to 14 together, the present disclosure further provides a motor assembly 100, including: a motor module and a motor holder 10; where the motor module includes a motor housing 20, a stator 31, and a rotor 32, the motor housing 20 having a receiving cavity 21; the stator 31 and the rotor 32 are disposed inside the receiving cavity 21, the motor holder 10 is disposed on an outer side of the motor housing 20, the rigid body 11 is fixed to the motor housing 20, and the vibration damping protrusion 122 faces an outer surface of the motor housing 20.

When a coil of the stator 31 is energized to generate a magnetic field that can drive the rotor 32 to rotate, the rotor 32 is prone to vibration when it rotates, which in turn causes vibration of other structures around it. Since the rotor 32 is arranged in the motor housing 20, the motor housing 20 is equivalent to forming a vibration source. Therefore, by providing the motor holder 10 outside the motor housing 20, and the vibration damping protrusion 122 faces the outer surface of the motor housing 20, the motor housing 20 and the rigid body 11 are spaced apart, and the vibration of the motor housing 20 is reduced to be transmitted to the motor holder 10.

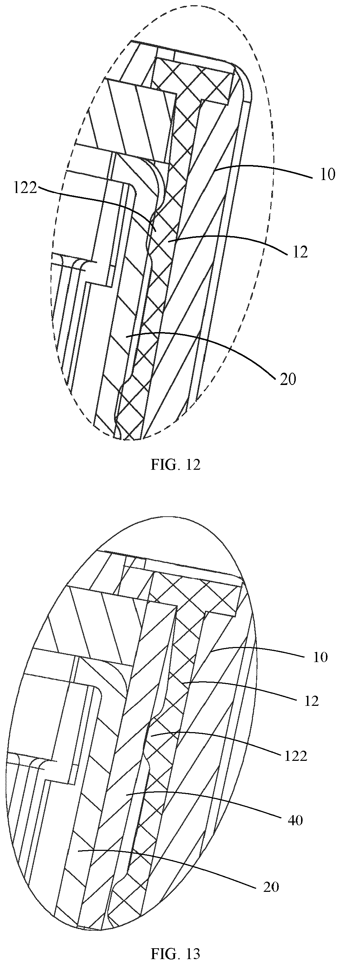

As shown in FIG. 12, in some embodiments, the vibration dampening protrusion 122 directly abuts against the outer surface of the motor housing 20 to limit the outer surface of the motor housing 20 from contacting the rigid body 11.

Alternatively, as shown in FIG. 13, in other embodiments, the motor assembly 100 further includes a vibration damping sleeve 40; the motor housing 20, the vibration damping sleeve 40, and the motor holder 10 are disposed in a sleeving manner in sequence; the vibration damping sleeve 40 abuts against the motor housing 20 and the vibration damping protrusions 122, respectively. Specifically, vibration of the motor housing 20 is first transmitted to the vibration damping sleeve 40, and after damping by the vibration damping sleeve 40, the remaining vibration and noise are transmitted to the vibration damping structure 12 and are buffered and absorbed by the vibration damping structure 12. The simultaneous setting of the vibration damping sleeve 40 and the vibration damping structure 12 provides a double vibration damping effect and thus effectively prevents the transmission of vibration.

The vibration damping sleeve 40 may be made of a material with a better vibration damping effect such as silicone, rubber, or TPU.

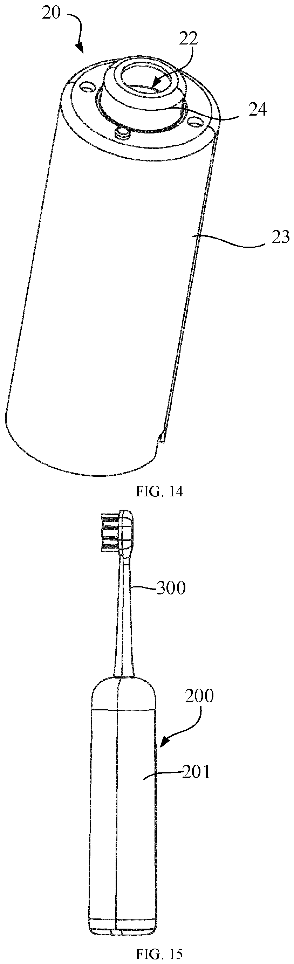

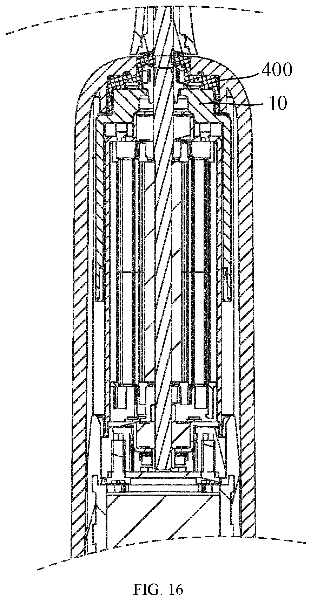

Referring to FIGS. 15 and 16 together, the present disclosure further provides an electric toothbrush; the electric toothbrush includes a handle 200 and a brush head 300 connected to an end of the handle 200; the handle 200 is configured for a user to hold and is usually in the shape of an elongated strip, and the whole of which may be of a column shape or a flat shape.

The handle 200 includes a housing 201; the housing 201 defines a mounting cavity, the motor assembly 100 is arranged in the mounting cavity, and the motor holder 10 is fixed to the housing 201. For the specific structure of the motor assembly 100, reference may be made to the above embodiments, and it will not be repeated herein.

The rigid body 11 of the motor holder 10 serves to fix the motor housing 20 with the housing 201, preventing the motor housing 20 from moving relative to the housing 201, thereby maintaining the motor shaft 50, which is threaded out from the motor housing 20, at a predetermined position of the brush head 300.

In some embodiments, the rigid body 11 and the motor housing 20 are fixed by means of screws or clasps, etc.

Further, the rigid body 11 is arranged with an anti-rotation rib 117, and an anti-rotation groove (not shown) is defined on an inner surface of the housing 201 or a cushioning structure 400 (FIG. 16); the anti-rotation rib 117 is inserted into the anti-rotation groove, preventing the rigid body 11 from rotating with respect to the housing 201, and thus making the motor holder 10 fixed with respect to the housing 201. In addition, an end of the motor assembly 100 abuts against the inner surface of the housing 201, the other end of the motor assembly 100 abuts against the housing 201 via the motor holder 10, and the other end of the motor assembly 100 is further restricted from rotating by the cooperation of the anti-rotation rib and the anti-rotation groove, thereby making the motor holder 10 fixed with respect to the housing 201.

Further, the motor assembly 100 further includes a motor shaft 50; where the motor shaft 50 is fixed to the rotor 32 and is rotatable together with the rotor 32; the motor housing 20 defines a shaft hole 22, and the motor shaft 50 is connected to the brush head 300 after being threaded out of the motor housing 20 from the shaft hole 22, thereby driving the brush head 300 to rotate or oscillate.

Referring again to FIGS. 3, 14, and 16 in conjunction, in some embodiments, the rigid body 11 and the motor housing 20 are each in the shape of a stepped cylinder; the rigid body 11 includes a first large-cylinder section 118 and a first small-cylinder section 119, and a length of the first large-cylinder section 118 is greater than a length of the first small-cylinder section 119. The motor housing 20 includes a second large-cylinder section 23 and a second small-cylinder section 24, the first large-cylinder section 118 being sleeved outside the second large-cylinder section 23, and the first small-cylinder section 119 being sleeved outside the second small-cylinder section 24. The first small-cylinder section 119 abuts against the housing 201 through the cushioning structure 400, and the vibration damping structure 12 is arranged on the first large-cylinder section 118. In the embodiments, an end of the motor holder 10 abuts against the housing 201 through the cushioning structure 400, such that even if vibration of the motor housing 20 is transmitted out of the second small-cylinder section 24, it can be absorbed by the cushioning structure 400 therein, thereby preventing the vibration from being transmitted to the housing 201. The vibration damping structure 12 is arranged in another area not covered by the cushioning structure 400, such that the vibration transmitted from the second large-cylinder section 23 can be absorbed. Further, by arranging the vibration damping structure 12 in the area with a longer length and a larger diameter, the vibration damping structure 12 can be disposed surrounds the second large-cylinder section 23 to sufficiently reduce the transmission of vibrations therein.

In the above, the first end face 115 connects the first large-cylinder section 118 and the first small-cylinder section 119.

Finally, it should be noted that the above embodiments are only used to illustrate the technical solutions of the present disclosure, and not to limit them; although the present disclosure has been described in detail with reference to the foregoing embodiments, a person of ordinary skill in the art should understand that it is still possible to make modifications to the technical solutions documented in the foregoing embodiments, or to make equivalent substitutions for some of the technical features therein; and such modifications or substitutions do not cause the essence of the corresponding technical solutions to depart from the essence of the various embodiments of the present disclosure. These modifications or substitutions do not cause the essence of the technical solutions to depart from the spirit and scope of the technical solutions of the embodiments of the present disclosure.

## Claims

1. A motor holder, configured to be arranged on a motor module; wherein the motor holder comprises:
a first surface facing the motor module;
a rigid body, being a hard rubber part; and
a vibration damping structure, being a soft rubber part; wherein the vibration damping structure is integrally injection molded with the rigid body; the vibration damping structure comprises a bonding portion and a plurality of vibration damping protrusions arranged on the bonding portion; the bonding portion is connected to the rigid body, the plurality of vibration damping protrusions are arranged at intervals, and the plurality of vibration damping protrusions protrude from the first surface.

2. The motor holder according to claim 1, wherein the first surface is arranged with an adhesive compartment, and the bonding portion is embedded in the adhesive compartment.

3. The motor holder according to claim 2, wherein a side of the bonding portion back away from the adhesive compartment is flush with the first surface.

4. The motor holder according to claim 2, wherein the rigid body is of a cylindrical shape, and an end of the rigid body defines an adhesive injection hole; the first surface is an inner wall surface of the rigid body; the adhesive compartment comprises a first groove extending along an axial direction of the rigid body, and an end of the first groove is in communication with the adhesive injection hole; a width of the first groove gradually increases in a direction away from the adhesive injection hole.

5. The motor holder according to claim 2, wherein a groove bottom of the adhesive compartment defines a restriction groove, and a portion of the bonding portion is embedded in the restriction groove.

6. The motor holder according to claim 5, wherein the rigid body comprises a first end face and a second end face disposed back-to-back; the first surface connects the first end face and the second end face; the first end face defines an adhesive injection hole, and the adhesive injection hole is in communication with the adhesive compartment; the restriction groove passes through the second end face.

7. The motor holder according to claim 6, wherein the rigid body is of a cylindrical shape, and the first surface is an inner wall surface of the rigid body; the adhesive compartment comprises a first groove and a second groove; the first groove extends along an axial direction of the rigid body, and an end of the first groove is in communication with the adhesive injection hole; the another end of the first groove is in communication with the second groove; the second groove extends along a peripheral direction of the rigid body;
the restriction groove is defined on the second groove, and a length of the restriction groove along the peripheral direction of the rigid body is equal to a length of the second groove along the peripheral direction of the rigid body.

8. The motor holder according to any one of claims 1-7, wherein the rigid body is of a cylindrical shape, and the vibration damping structure is arranged on a peripheral wall of the rigid body; the vibration damping structure comprises a plurality of vibration damping sections spaced apart along a peripheral direction of the rigid body; each vibration damping section extends along an axial direction of the rigid body and is arranged with at least some of the plurality of vibration damping protrusions.

9. The motor holder according to claim 8, wherein the vibration damping structure further comprises a connecting section extending along the peripheral direction of the rigid body and connecting the plurality of vibration damping sections.

10. The motor holder according to claim 9, wherein the rigid body defines a plurality of adhesive injection holes spaced apart along the peripheral direction of the rigid body; for each of the plurality of adhesive injection holes, the adhesive injection hole faces a corresponding vibration damping section; an end of the corresponding vibration damping section is disposed within the adhesive injection hole, and another end of the vibration damping section is connected to the connecting section.

11. The motor holder according to claim 9, wherein the connecting section comprises a plurality of connecting sections spaced apart along the peripheral direction of the rigid body, each connecting section connecting at least some of the plurality of vibration damping sections.

12. The motor holder according to claim 8, wherein the plurality of vibration damping sections are uniformly distributed along the peripheral direction of the rigid body, each vibration damping section is arranged with at least some of the plurality of vibration damping protrusions, and the at least some of the plurality of vibration damping protrusions disposed on each vibration damping section are uniformly distributed along an axial direction of the rigid body.

13. A motor assembly, comprising:
a motor module, comprising a motor housing, a stator, and a rotor; wherein the motor housing defines a receiving cavity, and the stator and the rotor are disposed inside the receiving cavity; and
the motor holder according to any one of claims 1-12, disposed on an outer side of the motor housing; wherein the rigid body is fixed to the motor housing, and the plurality of vibration damping protrusions face an outer surface of the motor housing.

14. The motor assembly according to claim 13, wherein the plurality of vibration damping protrusions directly abut against the outer surface of the motor housing; or
the motor assembly further comprises a vibration damping sleeve; the motor housing, the vibration damping sleeve, and the motor holder are disposed in a sleeving manner in sequence; the vibration damping sleeve abuts against the motor housing and the plurality of vibration damping protrusions, respectively.

15. An electric toothbrush, comprising:
a handle, comprising a housing; wherein the housing defines a mounting cavity; and
the motor assembly according to claim 13 or 14, disposed in the mounting cavity; wherein the motor holder is fixed to the housing.
